(19) **Europäisches Patentamt**

**European Patent Office**

**Office européen des brevets**

(11) **EP 1 398 490 A2**

(12) **EUROPÄISCHE PATENTANMELDUNG**

(43) Veröffentlichungstag:
  **17.03.2004  Patentblatt 2004/12**

(51) Int Cl.⁷: **F02D 41/38**, F02D 41/18,
  F02B 37/12, F02D 23/02

(21) Anmeldenummer: **03020367.3**

(22) Anmeldetag: **09.09.2003**

(84) Benannte Vertragsstaaten:
  **AT BE BG CH CY CZ DE DK EE ES FI FR GB GR
  HU IE IT LI LU MC NL PT RO SE SI SK TR**
  Benannte Erstreckungsstaaten:
  **AL LT LV MK**

(30) Priorität: **10.09.2002  DE 10241884**

(71) Anmelder: **Volkswagen AG
  38436 Wolfsburg (DE)**

(72) Erfinder:
  • **Pelz, Norbert
    38479 Tappenbeck (DE)**

  • **Schultalbers, Matthias
    38536 Meinersen/Ahnsen (DE)**
  • **Sprysch, Andreas
    31234 Edemissen (DE)**
  • **Braun, Holger, Dr.
    38518 Gifhorn (DE)**
  • **Von Der Ohe, Thomas
    38106 Braunschweig (DE)**

(74) Vertreter: **Kandlbinder, Markus Christian et al
  Zeitler, Dickel, Kandlbinder,
  Herrnstrasse 44
  80539 München (DE)**

(54) **Verfahren zum Betreiben einer Brennkraftmaschine**

(57)  Die Erfindung betrifft ein Verfahren zum Betreiben einer Brennkraftmaschine, insbesondere Dieselmotor, insbesondere eines Kraftfahrzeugs, mit einem Luftpfad für Ansaugluft. Hierbei wird durch wenigstens ein im Luftpfad angeordnetes erstes Bauteil ein Frischluft-Massenstrom $\dot{m}_E$ durch dieses erste Bauteil und durch wenigstens ein im Luftpfad dem ersten Bauteil nachgeordnetes zweites Bauteil ein Frischluft-Massenstrom $\dot{m}_A$ durch dieses zweite Bauteil bestimmt wird. Anschließend wird aus der Summe $\dot{m}_E$ -$\dot{m}_A$ von zuströmenden $\dot{m}_E$ und abströmenden $\dot{m}_A$ Frischluft-Massenströmen zwischen erstem und zweitem Bauteil ein dort herrschender Druck $p_L$ berechnet.

FIG. 1

**Beschreibung**

Die Erfindung betrifft ein Verfahren zum Betreiben einer Brennkraftmaschine, insbesondere Dieselmotor, insbesondere eines Kraftfahrzeugs, mit einem Luftpfad für Ansaugluft, gemäß dem Oberbegriff des Anspruchs 1.

Beim Betrieb einer Brennkraftmaschine hat eine Füllungserfassung die Aufgabe, die Luftmasse im Brennraum möglichst genau und dynamisch richtig zu bestimmen, um eine Grundlage für die Einstellung von Stellgrößen zu liefern. Eine direkte Messung gibt es nicht. Die verschiedenen, bekannten Meßprinzipien sind wegen ihrer indirekten Meßmethode mehr oder weniger genau. Die gebräuchlichste Methode mit einem Heißfilmluftmassenmesser ist insbesondere bei aufgeladenen Motoren durch die ungenügende Nähe zum Brennraum dynamisch ungenau, da lange Wege im Luftpfad zu zeitlichen Verzögerungen und Speichereffekten führen. Zudem haben füllungsbeeinflussende Aktuatoren, wie beispielsweise Ladungsbewegungsklappe (LBK), Nockenwelle, Tankentlüftung, Abgasrückführung (AGR), sowie die Komponenten Abgasturbolader (ATL), und Kompressor einen starken Einfluß auf die Füllung und somit auf die Stellgrößen des Motors.

Der vorliegenden Erfindung liegt die Aufgabe zugrunde, ein Verfahren der obengenannten Art bzgl. der Genauigkeit der Füllungserfassung zu verbessern.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß durch wenigstens ein im Luftpfad angeordnetes erstes Bauteil ein Frischluft-Massenstrom $\dot{m}_E$ durch dieses erste Bauteil und durch wenigstens ein im Luftpfad dem ersten Bauteil nachgeordnetes zweites Bauteil ein Frischluft-Massenstrom $\dot{m}_A$ durch dieses zweite Bauteil bestimmt wird; und daß aus der Summe $\dot{m}_E$ -$\dot{m}_A$ von zuströmenden $\dot{m}_E$ und abströmenden $\dot{m}_A$ Frischluft-Massenströmen zwischen erstem und zweitem Bauteil ein dort herrschender Druck $p_L$ berechnet wird.

Dies hat den Vorteil, daß eine vollständig physikalisch basierte Füllungserfassung realisiert ist, die auch Einflüsse von füllungsbeeinflussenden Aktuatoren, wie beispielsweise Ladungsbewegungsklappe (LBK), Nockenwelle, Tankentlüftung, Abgasrückführung (AGR), sowie die Komponenten Abgasturbolader (ATL) und Kompressor, berücksichtigt, bevor diese sich in den motorischen Meßgrößen bemerkbar machen. Außerdem ist der Applikationsaufwand relativ niedrig, da die einzustellenden Parameter auf physikalischen Grundlagen beruhen. Die Zustandsgrößen der Luft oder des Abgases können an messtechnisch nur schwer zugänglichen Stellen modelliert werden und dienen zur Berechnung der Stellgrößen der Aktuatoren. Neben der Erfassung der Luftmasse in den Zylindern können die Zustandsgrößen der Luft im gesamten Frischluftpfad berechnet werden.

Beispielsweise umfassen das erste und zweite Bauteil einen Luftfilter, einen Kompressor, einen Abgasturbolader eine Verdichtungsdrosselklappe, eine Drosselklappe und/oder einen Lufteinlaß für Zylinder der Brennkraftmaschine.

Der Druck $p_L$ wird durch Integration der Gleichung,

$$\frac{dp_L}{dt} = \frac{\dot{m}_E - \dot{m}_A}{V_{ASR}/R \cdot T_L}$$

berechnet, wobei $V_{ASR}$ das Volumen zwischen dem ersten und dem zweiten Bauteil, $R$ die Gaskonstante und $T_L$ die Temperatur der Luft zwischen dem ersten und zweiten Bauteil ist. Die jeweiligen Frischluft-Massenströme werden durch ein das jeweilige Bauteil beschreibendes Modell mit einem Druck vor dem jeweiligen Bauteil und entsprechenden, bauteilcharakteristischen Parametern als Eingangsparameter für das Modell berechnet.

In einer besonders bevorzugten Ausführungsform sind in dem Luftpfad für Ansaugluft ein Kompressor, ein Abgasturbolader, eine Verdichtungsdrosselklappe und eine Drosselklappe angeordnet, wobei ein Ausgang des Kompressors mit einem Eingang des Abgasturboladers verbunden ist, ein den Kompressor überbrückender sowie durch die Verdichtungsdrosselklappe wahlweise schließbarer Luftkanal vorgesehen ist und stromab des Abgasturboladers die Drosselklappe angeordnet ist, wobei ein Frischluft-Massenstrom $\dot{m}_{VDK}$ durch die Verdichtungsdrosselklappe berechnet wird; ein Frischluft-Massenstrom $\dot{m}_K$ durch den Kompressor berechnet wird; ein Frischluft-Massenstrom $\dot{m}_{ATL}$ durch den Abgasturbolader berechnet wird; ein Frischluft-Massenstrom $\dot{m}_{DK}$ durch die Drosselklappe berechnet wird; ein Frischluft-Massenstrom $\dot{m}_{Br}$ in einen Brennraum der Brennkraftmaschine bestimmt wird; aus der Summe $\dot{m}_K$ - $\dot{m}_{VDK}$ - $\dot{m}_{ATL}$ von zuströmenden und abströmenden Frischluft-Massenströmen vor dem Abgasturbolader ein Druck $p_{vATL}$ vor dem Abgasturbolader berechnet wird; aus der Summe $\dot{m}_{ATL}$ - $\dot{m}_{DK}$ von zuströmenden und abströmenden Frischluft-Massenströmen vor der Drosselklappe ein Druck $p_{vDK}$ vor der Drosselklappe berechnet wird; aus der Summe $\dot{m}_{DK}$ - $\dot{m}_{Br}$ von zuströmenden und abströmenden Frischluft-Massenströmen vor der Brennkraftmaschine ein Druck $p_S$ im Saugrohr berechnet wird und der Saugrohrdruck $p_S$ als Eingangswert einem Saugrohrmodell zur Füllungserfassung zugeführt wird.

Dies hat den Vorteil, daß alle Massenströme und Zustandsgrößen des Gases an den Bauteilen bekannt sind und mit Hilfe des gemessenen Drucksignals verifiziert werden können. Auch ein Ersatz von hinreichend genau modellierten Drucksensoren ist möglich. Die Verwendung dieser modellierten Größen für die Vorsteuerung der Aktuatoren ist dann wesentlich genauer, da alle füllungsbeeinflussenden Größen im Ansaugweg und die Einflußgrößen über den Abgasturbolader im Abgastrakt berücksichtigt werden.

Der Druck $p_{vATL}$ wird durch Integration der Gleichung

$$\frac{dp_{vATL}}{dt} = \frac{\dot{m}_K - \dot{m}_{VDK} - \dot{m}_{ATL}}{V_{K\_ATL} / R \cdot T_{L-K-ATL}}$$

berechnet, wobei $V_{K\_ATL}$ das Volumen des Luftpfades zwischen dem Kompressor und dem Abgasturbolader, $R$ die Gaskonstante und $T_{L-K-ATL}$ die Temperatur der Luft zwischen dem Kompressor und dem Abgasturbolader ist.

Der Druck $p_{vDK}$ wird durch Integration der Gleichung

$$\frac{dp_{vDK}}{dt} = \frac{\dot{m}_{ATL} - \dot{m}_{DK}}{V_{ATL\_DK} / R \cdot T_{L-ATL-DK}}$$

berechnet, wobei $V_{ATL\_DK}$ das Volumen des Luftpfades zwischen dem Abgasturbolader und der Drosselklappe, $R$ die Gaskonstante und $T_{L-ATL-DK}$ die Temperatur der Luft zwischen dem Abgasturbolader und der Drosselklappe ist.

Der Druck $p_s$ wird durch Integration der Gleichung

$$\frac{dp_S}{dt} = \frac{\dot{m}_{DK} - \dot{m}_{Br}}{V_S / R \cdot T_{L-SR}}$$

berechnet, wobei $V_S$ das Volumen des Saugrohres, $R$ die Gaskonstante und $T_{L-SR}$ die Temperatur der Luft im Saugrohr ist.

In einem ersten Teilsystem des Luftpfades wird der Frischluft-Massenstrom $\dot{m}_{VDK}$ aus einem Modell für die Verdichtungsdrosselklappe mit den Eingangsparametern Umgebungstemperatur $t_u$, Umgebungsdruck $p_u$ und Stellung $\alpha_{VDK}$ der Verdichtungsdrosselklappe berechnet. Optional wird durch Rückwärtsrechnung des Modells für die Verdichtungsdrosselklappe für einen vorgegebenen Druck $p_{vATL}$ vor dem Abgasturbolader eine Stellung $\alpha_{VDK}$ der Verdichtungsdrosselklappe berechnet.

In einem zweiten Teilsystem des Luftpfades wird der Frischluft-Massenstrom $\dot{m}_K$ aus einem Modell für den Kompressor mit den Eingangsparametern Kompressordrehzahl $n_K$ und Umgebungsdruck $p_u$ berechnet.

In einem dritten Teilsystem des Luftpfades wird der Frischluft-Massenstrom $\dot{m}_{ATL}$ aus einem Modell für den Abgasturbolader mit den Eingangsparametern Druck $p_{vATL}$ vor dem Abgasturbolader und Drehzahl $n_{ATL}$ des Abgasturboladers und/oder Leistung $P_{ATL}$ des Abgasturboladers berechnet. Dabei wird die Drehzahl $n_{ATL}$ des Abgasturboladers bevorzugt aus einem Turbinenmodell für den Abgasturbolader iterativ mit einem Abgas-Massenstrom $\dot{m}_{Abg}$, einer Abgastemperatur $T_{Abg}$, einem Frischluft-Massenstrom $\dot{m}_{ATL}$ durch den Abgasturbolader aus einer vorhergehenden Berechnung, einer Temperatur $T_{ATL}$ am Abgasturbolader, einem Abgas-Massenstrom $\dot{m}_{WG}$ durch ein Wastegate und einem Öffnungswert $\alpha_{WG}$ für das Wastegate als Eingangswerte berechnet. Ein in sich geschlossenes, numerisches Modell erzielt man dadurch, daß der Abgas-Massenstrom $\dot{m}_{Abg}$ aus einer Füllungserfassung und die Abgastemperatur $T_{Abg}$ aus einem Abgastemperaturmodell bestimmt werden.

Eine Vorsteuerung des Wastegates wird dadurch erzielt, daß durch Rückwärtsrechnung des Modells für den Abgasturbolader und des Turbinenmodells für einen vorgegebenen Druck $p_{vDK}$ vor der Drosselklappe ein Solltastverhältnis für das Wastegate berechnet wird.

Zum Realisieren einer Ladedruckregelung wird das Solltastverhältnis für das Wastegate einem Regler für den Ladedruck als Vorsteuerwert zugeführt, wobei der Vorsteuerwert einem Regelwert aus einem Regler für eine Turboladerstrecke zum Berechnen eines Tastverhältnisses $t_{vWG}$ für das Wastegate hinzu addiert wird.

Zum Anpassen der Berechnung an Veränderungen im System, wie beispielsweise eine verschmutzte Drosselklappe, wird aus einer Differenz zwischen dem berechneten Druck $p_{vDK}$ vor der Drosselklappe und einem mittels eines Sensors gemessenen Druck $p_{vDKg}$ vor der Drosselklappe ein Korrekturwert für die Drehzahl $n_{ATL}$ des Abgasturboladers bestimmt.

In einem 4. Teilsystem des Luftpfades wird der Frischluft-Massenstrom $\dot{m}_{DK}$ aus einem Modell für die Drosselklappe mit den Eingangsparametern Temperatur $T_{vDK}$ vor der Drosselklappe, Saugrohrdruck $p_s$, Druck $p_{vDK}$ vor der Drosselklappe und Drosselklappenstellung $\alpha_{DK}$ berechnet. Optional wird durch Rückwärtsrechnung des Modells für die Drosselklappe für einen vorgegebenen Druck $p_s$ im Saugrohr eine Stellung $\alpha_{DK}$ der Drosselklappe berechnet.

Um einen Dynamikvorhalt mittels des Druckspeichervermögens des Luftpfades zu realisieren, wird eine Differenz zwischen einem Sollwert für den Frischluft-Massenstrom $\dot{m}_{DK}$ durch die Drosselklappe und einem Frischluft-Massenstrom $\dot{m}_K$ durch den Kompressor bestimmt und diese Differenz zusammen mit einem Sollwert für den Druck $p_{vATL}$ vor dem Abgasturbolader als Eingangswert für die Rückwärtsrechnung zur Berechnung eines Sollwertes für die Stellung $\alpha_{VDK}$ der Verdichtungsdrosselklappe verwendet, und wird aus einem Sollwert $p_{ssol}$ für den Druck $p_s$ im Saugrohr zusammen mit einem Faktor für einen Dynamikvorhalt ein Sollwert für den Druck $p_{vDK}$ vor der Drosselklappe berechnet, wobei dieser Sollwert für den Druck $p_{vDK}$ vor der Drosselklappe zusammen mit dem Sollwert $p_{ssol}$ für den Druck $p_s$ im Saugrohr und einem Sollwert für den Frischluft-Massenstrom $\dot{m}_{DK}$ durch die Drosselklappe als Eingangswert für die Rückwärtsrechnung zur Berechnung eines Sollwertes für die Stellung $\alpha_{DK}$ der Drosselklappe verwendet wird. Hierbei wird in vorteilhafter Weise aus dem Sollwert für den Druck $p_{vDK}$ vor der Drosselklappe und dem Sollwert für den Frischluft-Massenstrom $\dot{m}_{DK}$ durch die Drosselklappe mittels eines Kennfeldes für den Abgasturbolader der Sollwert für den Druck $p_{vATL}$ vor dem Abgasturbolader bestimmt.

Alternativ wird aus dem aktuellen Istdruckverhältnis am Abgasturbolader und aus dem Druck vor der Drosselklappe der Druck vor dem Abgasturbolader bestimmt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in

Fig. 1  eine schematische Darstellung des Luftpfades und einer Abgasseite einer doppelt aufgeladenen Brennkraftmaschine,

Fig. 2  eine schematische Darstellung der Modellierung von Motorkomponenten der Brennkraftmaschine gemäß Fig. 1,

Fig.3  eine schematische Darstellung der Modellierung des Luftpfades der Brennkraftmaschine gemäß Fig. 1,

Fig. 4  eine schematische Darstellung eines Turbinenmodells,

Fig. 5  eine alternative Ausführungsform des Modells gemäß Fig. 2 mit Adaption,

Fig. 6  eine schematische Darstellung eines Ansteuerungskonzeptes für füllungsbeeinflussende Komponenten,

Fig. 7  eine schematische Darstellung eines Dynamikvorhaltes vor der Drosselklappe,

Fig. 8  eine schematische Darstellung zur Bestimmung eines Solltastverhältnisses für das Wastegate und

Fig. 9  eine schematische Darstellung einer Ladedruckregelung.

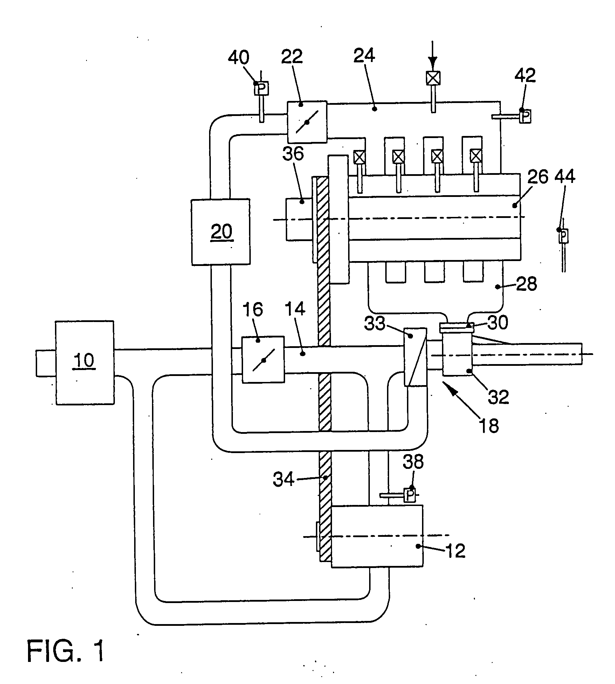

Das erfindungsgemäße Verfahren wird nachfolgend lediglich beispielhaft anhand einer doppelt aufgeladenen Brennkraftmaschine erläutert. Obwohl die Erfindung bei doppelt aufgeladenen Brennkraftmaschine besondere Vorteile bietet, ist sie nicht auf doppelt aufgeladene Brennkraftmaschinen beschränkt. Wie aus Fig. 1 ersichtlich, umfaßt die Brennkraftmaschine einen Luftpfad, in dem ein Luftfilter 10, ein Kompressor 12, ein den Kompressor 12 überbrückender Luftkanal 14, eine den Luftkanal 14 wahlweise verschließende Verdichtungsdrosselklappe 16, ein Abgasturbolader 18, ein Ladeluftkühler 20, eine Drosselklappe 22 und ein Saugrohr 24, welches in jeweilige Brennräume in einem Zylinderkurbelgehäuse 26 der Brennkraftmaschine mündet, angeordnet sind. An einem Abgaskrümmer 28 ist ein Wastegate 30 angeordnet, welches eine Turbine 32 des Abgasturboladers 18 mit einem Abgasstrom beaufschlagt. Der Abgasturbolader 18 umfaßt ferner einen Verdichter 33. Ein Ausgang des Kompressors 12 mündet in einen Eingang des Abgasturboladers 18. Der Kompressor 12 wird über einen Riemen 34 von einer Kurbelwelle der Brennkraftmaschine angetrieben. Hierbei ist der Antrieb des Kompressors 12 mittels einer Kupplung 36, beispielsweise einer Magnetkupplung, wahlweise von der Kurbelwelle trennbar. Das Konzept dieser Anordnung liegt darin, in einem niedrigen Drehzahlbereich eine Auflading durch den Kompressor 12 zu realisieren und ab einer bestimmten Drehzahl, ab der der Abgasturbolader 18 eine ausreichende Auflading gewährleistet, den Kompressor 12 abzuschalten. Jeweilige Sensoren 38, 40, 42 und 44 messen jeweils einen Druck $p_{vATL}$ vor dem Abgasturbolader 18, einen Druck $p_{vDK}$ vor der Drosselklappe 22, einen Druck $p_s$ im Saugrohr 24 und einen Umgebungsdruck $p_u$.

Erfindungsgemäß ist es vorgesehen, einen Saugrohrdruck $p_s$ zu modellieren, d.h. aus einem Modell zu berechnen. Hierbei liegt der Berechnung einer Druckänderung in einem Volumen folgende Überlegung zugrunde: Wenn in ein vorgegebenes Volumen $V_{ASR}$ ein Massenstrom $\dot{m}_E$ einströmt und ein Massenstrom $\dot{m}_A$ abströmt, dann ist eine Druckänderung über dieses Volumen proportional zu einer Summe aller einströmenden und ausströmenden Massenströme, wobei abströmende Massenströme negativ in die Summe eingehen. Es gilt daher

$$\frac{dp_L}{dt} \approx \dot{m}_E - \dot{m}_A.$$

Aus der Gleichung

$$\dot{m}_A = \dot{m}_E - \frac{dp_L}{dt} \cdot \frac{V_{ASR}}{R \cdot T_L}$$

folgt dann

$$\frac{dp_L}{dt} = \frac{\dot{m}_E - \dot{m}_A}{V_{ASR}\Big/_{R\cdot T_L}}$$

Bei bekannten Massenströmen, Volumen und Temperatur berechnet sich dann der Druck durch Integration dieser Gleichung.

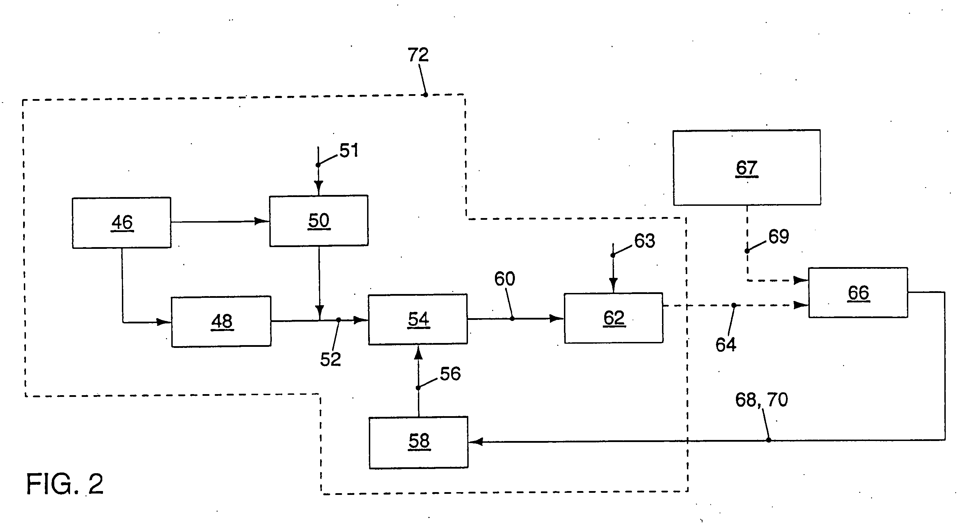

Fig. 2 zeigt eine Darstellung der modellierten Motorkomponenten. Ein Druck 46 vor dem Kompressor 12, beispielsweise der Umgebungsdruck, wird einem Modell 48 für den Kompressor 12 und einem Modell 50 für die Verdichtungsklappe 16 zugeführt. Zusätzlich erhält das Modell 50 bei 51 einen Istwinkel (Winkelstellung) der Verdichtungsdrosselklappe 16. Diese beiden Modelle 50 und 48 werden in Echtzeit gleichzeitig berechnet und liefern einen Druck 52 vor dem Abgasturbolader 18. Der Druck 52 vor dem Abgasturbolader 18 wird einem Modell 54 für den Abgasturbolader 18 zugeführt und daraus zusammen mit einer Laderdrehzahl und/oder Laderleistung 56 aus einem Turbinenmodell 58 ein Druck 60 vor der Drosselklappe 22 berechnet. Der Druck 60 vor der Drosselklappe 22 wird einem Modell 62 für die Drosselklappe 22 zugeführt, welches zusätzlich bei 63 den Istwinkel (Winkelstellung) der Drosselklappe 22 erhält, und es wird daraus der modellierte Saugrohrdruck 64 berechnet. Dieser modellierte Saugrohrdruck 64 wird einem Saugrohrmodell 66 zugeführt, mittels welchem die Berechnung zur Füllungserfassung durchgeführt wird. Zusätzlich wird dem Saugrohrmodell 66 ein aus den gemessenen Größen 67 für die Drücke vor Abgasturbolader 18 und Drosselklappe 22 sowie dem gemessenen Druck im Saugrohr 24 abgeleiteter Saugrohrdruck bei 69 zugeführt. Alternativ werden dem Saugrohrmodell 66 die gemessenen Größen zur Verfügung gestellt. Aus dem Saugrohrmodell 66 wird der Abgas-Massenstrom 68 und aus einem Abgastemperaturmodell wird die Abgastemperatur 70 berechnet und dem Turbinenmodell 58 zugeführt, wodurch sich ein geschlossenes, numerisches Modell ergibt. In der Darstellung gemäß Fig. 2 bezeichnet 72 denjenigen Teil, welcher den Frischluftpfad modelliert.

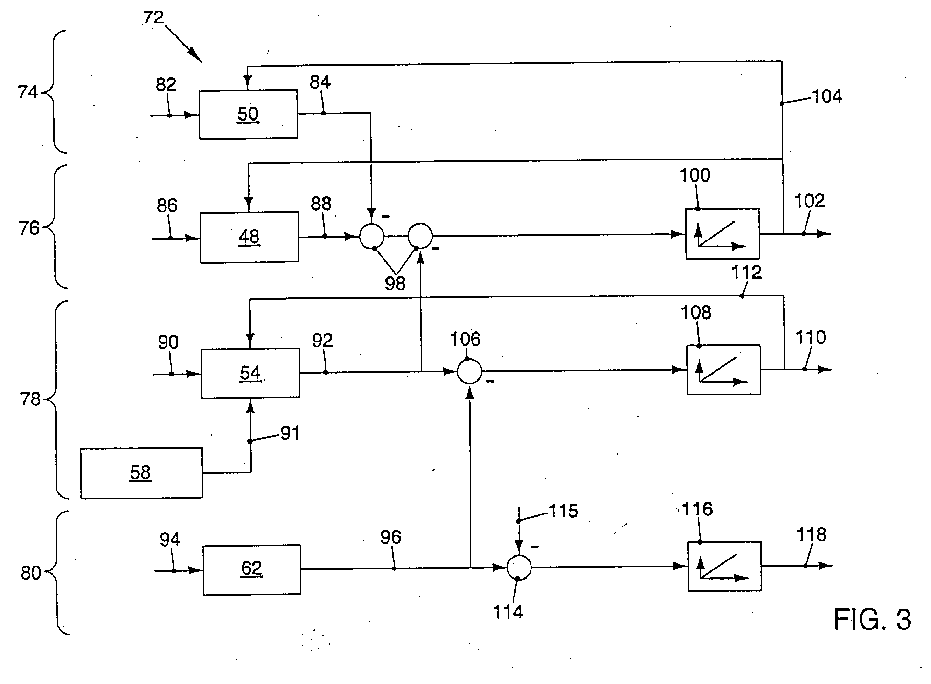

Fig. 3 veranschaulicht die Modellierung des Frischluftpfades 72 gemäß Fig. 2 im einzelnen. Der Frischluftpfad ist in vier Teilsysteme 74, 76, 78 und 80 aufgeteilt. Das erste Teilsystem 74 beschreibt den Teil des Frischluftpfades vor der Verdichtungsdrosselklappe 16. Das zweite Teilsystem 76 beschreibt den Teil des Frischluftpfades zwischen der Verdichtungsdrosselklappe 16, dem Kompressor 12 und dem Abgasturbolader 18. Das dritte Teilsystem 78 beschreibt den Teil des Frischluftpfades zwischen dem Abgasturbolader 18 und der Drosselklappe 22. Das vierte Teilsystem 80 beschreibt den Teil des Frischluftpfades zwischen der Drosselklappe 22 und den Eingängen in Brennräume der Brennkraftmaschine, d.h. den Teil des Frischluftpfades, welcher durch das Saugrohr 24 gebildet ist.

Dem Modell 50 für die Verdichtungsdrosselklappe 16 werden bei 82 als Eingangswerte die Umgebungstemperatur $T_U$, der Umgebungsdruck $p_u$ und die Stellung der Verdichtungsdrosselklappe $\alpha_{VDK}$ zugeführt. Bei 84 gibt das Modell 50 für die Verdichtungsdrosselklappe 16 einen Frischluft-Massenstrom $\dot{m}_{VDK}$ durch die Verdichtungsdrosselklappe 16 aus. Dem Modell 48 für den Kompressor 12 werden bei 86 als Eingangswerte eine Kompressordrehzahl $n_K$ und ein Umgebungsdruck $p_u$ zugeführt. Bei 88 gibt das Modell 48 für den Kompressor 12 einen Frischluft-Massenstrom $\dot{m}_K$ durch den Kompressor 12 aus. Dem Modell 54 für den Abgasturbolader 18 wird bei 90 als Eingangswert ein Druck vor dem Abgasturbolader $p_{vATL}$ zugeführt. Bei 91 wird dem Modell 54 für den Abgasturbolader 18 zusätzlich die im Turbinenmodell 58 berechnete Drehzahl $n_{ATL}$ des Abgasturboladers 18 und/oder Leistung $P_{ATL}$ des Abgasturboladers 18 zugeführt. Bei 92 gibt das Modell 54 für den Abgasturbolader 18 einen Frischluft-Massenstrom $\dot{m}_{ATL}$ durch den Abgasturbolader 18 und eine Temperatur am Abgasturbolader $T_{ATL}$ aus.

Bei 94 werden dem Modell 62 für die Drosselklappe 22 als Eingangswerte eine Temperatur $T_{vDK}$ vor der Drosselklappe 22, ein Druck $p_s$ im Saugrohr 24, der Druck $p_{vDK}$ vor der Drosselklappe 22 und eine Stellung (Winkelstellung) $\alpha_{DK}$ der Drosselklappe 22 zugeführt. Bei 96 gibt das Modell 62 für die Drosselklappe 22 einen Frischluft-Massenstrom $\dot{m}_{DK}$ durch die Drosselklappe 22 aus.

Bei 98 erfolgt die Summenbildung

$$\dot{m}_K - \dot{m}_{VDK} - \dot{m}_{ATL}$$

und diese Summe wird einem Berechnungsblock 100 zugeführt, der die folgende Gleichung Integriert,

$$\frac{dp_{vATL}}{dt} = \frac{\dot{m}_K - \dot{m}_{VDK} - \dot{m}_{ATL}}{V_{K\_ATL}\Big/_{R\cdot T_L}},$$

wobei $V_{K\_ATL}$ das Volumen des Luftpfades zwischen dem Kompressor und dem Abgasturbolader, $R$ die Gaskonstante und $T_L$ die Lufttemperatur zwischen dem Kompressor 12 und dem Abgasturbolader 18, d.h. im zweiten Teilsystem 76, ist. Der so berechnete Druck $p_{vATL}$ vor dem Abgasturbolader 18 wird bei 102 ausgegeben. Dieser Druck $p_{vATL}$ vor dem Abgasturbolader 18 wird über 104 sowohl an das Modell 50 für die Verdichtungsdrosselklappe 16 als auch an das Modell 48 für den Kompressor 12 zurück geführt. Außerdem dient er nach dem Anlaufen der Berechnung als Eingangswert bei 90 für das Modell 54 für den Abgasturbolader 18.

Bei 106 erfolgt die Summenbildung

$$\dot{m}_{ATL} - \dot{m}_{DK}$$

und diese Summe wird einem nachfolgenden Berechnungsblock 108 zugeführt, der die folgende Gleichung Integriert,

$$\frac{dp_{vDK}}{dt} = \frac{\dot{m}_{ATL} - \dot{m}_{DK}}{V_{ATL\_DK}/R \cdot T_L}$$

wobei $V_{ATL\_DK}$ das Volumen des Luftpfades zwischen dem Abgasturbolader und der Drosselklappe, $R$ die Gaskonstante und $T_L$ die Lufttemperatur zwischen dem Abgasturbolader 18 und der Drosselklappe 22, d.h. im dritten Teilsystem 78, ist. Der so berechnete Druck $p_{vDK}$ vor der Drosselklappe 22 wird bei 110 ausgegeben. Dieser Druck $p_{vDK}$ vor der Drosselklappe 22 wird über 112 an das Modell 54 für den Abgasturbolader 18 zurückgeführt. Außerdem dient er nach dem Anlaufen der Berechnung als Eingangswert bei 94 für das Modell 62 für die Drosselklappe 22.

Bei 114 erfolgt die Summenbildung

$$\dot{m}_{DK} - \dot{m}_{Br,}$$

wobei $\dot{m}_{Br}$ ein Frischluft-Massenstrom in einen Brennraum der Brennkraftmaschine ist und bei 115 zugeführt wird. Dieser Wert $\dot{m}_{Br}$ beschreibt ein Schluckverhalten der Brennkraftmaschine und ist ein motorspezifischer Wert. Diese Summe wird einem nachfolgenden Berechnungsblock 116 zugeführt, der die folgende Gleichung Integriert,

$$\frac{dp_S}{dt} = \frac{\dot{m}_{DK} - \dot{m}_{Br}}{V_S/R \cdot T_L},$$

wobei $V_S$ das Volumen des Saugrohres 24, $R$ die Gaskonstante und $T_L$ die Lufttemperatur im Saugrohr, d.h. im vierten Teilsystem 80, ist. Der so berechnete Druck $p_S$ im Saugrohr wird bei 118 ausgegeben.

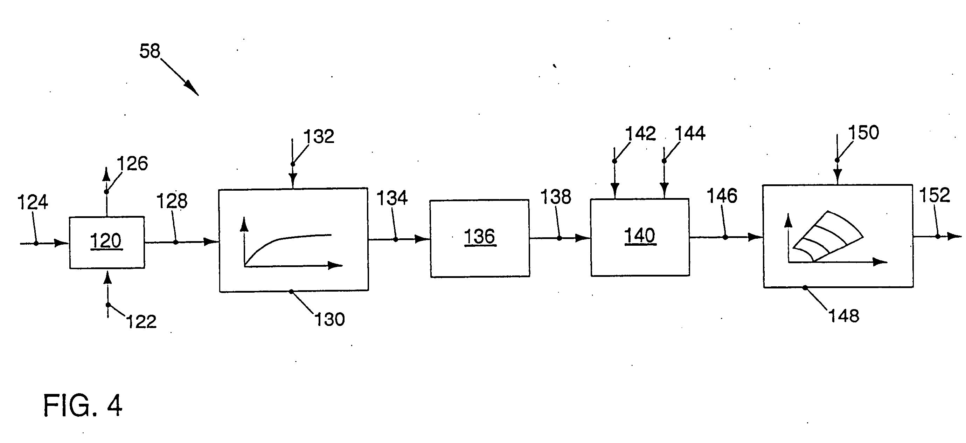

Fig. 4 veranschaulicht im Detail das Turbinenmodell 58. Dieses weist ein Modell 120 für das Wastegate 30 auf, dem als Eingangswerte bei 122 der Abgas-Massenstrom $\dot{m}_{Abg}$ und bei 124 ein Öffnungswert $\alpha_{WG}$ für das Wastegate 30 zugeführt wird. Der öffnungswert $\alpha_{WG}$ beschreibt, welchen Anteil des Abgas-Massenstromes $\dot{m}_{Abg}$ das Wastegate 30 in die Turbine 32 leitet. Dieser Öffnungswert ist beispielsweise ein Tastverhältnis eines das Wastegate ansteuernden, elektrischen Signals. Das Tastverhältnis beschreibt, mit welchem Öffnungsquerschnitt der Ladedruck oder der Umgebungsdruck auf das Wastegateventil geleitet wird. Der Überdruck durch den Lader öffnet dann das Wastegateventil. Der Anteil des Abgasmassenstroms in die Turbine wird somit von dem Tastverhältnis und dem anliegenden Ladedruck bestimmt: $\dot{m}_{WG} = f(t_{vWG}, p_{vDK}, pu)$, wobei $t_{vWG}$ das Tastverhältnis für das Wastegate, $p_{vDK}$ der Druck vor der Drosselklappe 22 und $p_U$ der Umgebungsdruck ist. Bei 126 gibt das Wastegatemodell 120 einen Abgas-Massenstrom $\dot{m}_{WG}$ durch das Wastegate 30 aus. Bei 128 gibt das Wastegatemodell 120 einen Abgas-Massenstrom $\dot{m}_{Turb}$ durch die Turbine 32 aus. In einem nachfolgenden Berechnungsblock 130 wird aus dem Abgas-Massenstrom $\dot{m}_{Turb}$ durch die Turbine 32 und einem bei 132 zugeführten Wert für die Abgastemperatur $T_{Abg}$ mittels eines Kennfeldes für die Turbine 32 ein Druckverhältnis $\Pi_{Turb}$ über die Turbine 32 bestimmt und bei 134 ausgegeben. In einem nachfolgenden Berechnungsblock 136 wird über eine Funktion $P_{Turb} = f(\pi)$ eine Turbinenleistung $P_{Turb}$ bestimmt und bei 138 ausgegeben. In einem nachfolgenden Berechnungsblock 140 wird über die Leistungsbilanz des Abgasturboladers 18 $P_{Turb} = P_{Verd}$, wobei $P_{Verd}$ eine Verdichterleistung ist, und den Eingangswerten Frischluft-Massenstrom $\dot{m}_{ATL}$ durch den Abgasturbolader 18 bei 142 sowie Abgastemperatur $T_{ATL}$ bei 144 ein Druckverhältnis $\Pi_{Verd}$ über den Verdichter 33 bestimmt und bei 146 ausgegeben. In einem nachfolgenden Block 148 wird aus dem Druckverhältnis $\Pi_{Verd}$ und dem bei 150 zugeführten Frischluft-Massenstrom $\dot{m}_{ATL}$ durch den Abgasturbolader 18 aus einer vorhergehenden Berechnung über ein Kennfeld für den Verdichter 33 die Drehzahl $n_{ATL}$ des Abgasturboladers 18 iterativ bestimmt und bei 152 ausgegeben.

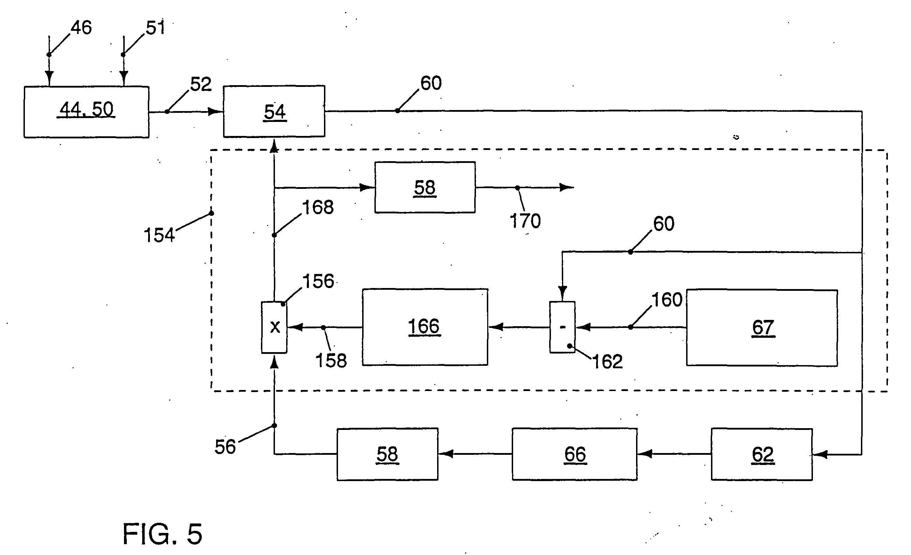

Fig. 5 zeigt eine bevorzugte Weiterbildung des Modells gemäß Fig. 2, wobei funktionsgleiche Teile mit gleichen Bezugsziffern wie in Fig. 2 bezeichnet sind, so daß zu deren Erläuterung auf die obige Beschreibung der Fig. 2 verwiesen wird. Zusätzlich zu dem Modell gemäß Fig. 2 beinhaltet das Modell gemäß Fig. 5 einen Adaptionblock 154. Die aus dem Turbinenmodell 58 bei 56 ausgegebene Laderdrehzahl $n_{ATL}$ wird bei 156 mit einem Korrekturwert 158 multipliziert. Zum Berechnen dieses Korrekturwertes 158 wird eine Differenz zwischen dem aus dem Block 67 (gemessene Größen) kommenden, gemessenen Druck $p_{vDKg}$ 160 vor der Drosselklappe 22 und dem in Block 54 (Modell für Abgasturbolader) berechneten Druck $p_{vDK}$ vor der Drosselklappe 22 in Block 162 bestimmt und bei 164 einem Adaptionsmodell 166 zugeführt. Aus dem Multiplikationsblock 156 wird dann eine korrigierte Laderdrehzahl $n_{ATLk}$ 168 ausgegeben und dem Block 54 (Modell für Abgasturbolader) zugeführt. Auf diese Weise erfolgt eine korrigierende Anpassung der in Block 54 (Modell für Abgasturbolader) verwendeten Laderdrehzahl $n_{ATL}$. Zusätzlich wird aus der korrigierten Laderdrehzahl $n_{ATLk}$ 168 mittels einer Rückrechnung des Turbinenmodells 58 bei 170 ein korrigierter Abgas-Massenstrom $\dot{m}_{Abgk}$ und eine korrigierte Abgastemperatur $T_{Abgk}$ ausgeben.

Grundlage des erfindungsgemäßen Verfahrens bildet die Modellierung des Speicherverhaltens des Luftpfades gemäß Fig. 2. Für jedes Teilsystem 74, 76, 78, 80 wird eine Bilanzierung der ein- und ausfließenden Massenströme vorgenommen (Fig. 3) und aus der entsprechenden Differenz der Massenströme der Druck in dem jeweiligen Teilsystem 74, 76, 78, 80 sowie die dort herrschende Lufttemperatur berechnet. Zur Berechnung der Zustandsgrößen im Abgastrakt 28 wird ein stationäres Turbinenmodell 54 verwendet (Fig. 4). Die Ergebnisse des Turbinenmodells 54 werden zur Berechnung des Verdichtungsdruckes im Frischluftpfad mit einbezogen. Für den nach dem Abgasturbolader 18 herrschenden Druck $p_{vDK}$ (Druck vor Drosselklappe) steht somit ein modellierter Druck 60 und ein gemessener Druck 160 zur Verfügung. Durch Vergleich dieser beiden Drücke wird sowohl das Frischluftmodell als auch das Turbinenmodell und damit dessen Eingangsgrößen, wie Abgastemperatur und Abgasgegendruck bzw. Abgas-Massenstrom, korrigiert. Durch das erfindungsgemäße Verfahren stehen zeitlich korrekt zugeordnete Zustandsgrößen der Luft und die instationären Massenströme während dynamischer Motorzustandsänderungen zur Verfügung. Die Drucksensoren können zur Validierung oder zur Adaption herangezogen bzw. können ggf. ersetzt werden. Mittels eines Vergleiches der Werte aus den Drucksensoren und der Modellwerte kann auf die Richtigkeit der modellierten Massenströme geschlossen werden. Es steht erfindungsgemäß eine vollständig physikalisch basierte Füllungserfassung unter Berücksichtigung aller füllungsbeeinflussenden Größen im Ansaugweg 74, 76, 78, 80 und Einflußgrößen über den Abgasturbolader im Abgastrakt zur Verfügung.

Hierdurch ist eine unmittelbarere Ansteuerung der füllungsbeeinflussenden Komponenten beim mehrfach aufgeladenen, direkteinspritzenden Verbrennungsmotor bzw. Dieselmotor, möglich. Die Ansteuerung der Regelkomponenten beim mehrfach aufgeladenen, direkteinspritzenden Verbrennungsmotor unterliegt einer zentralen Koordination. Aus der Sollfüllung des jeweiligen Betriebspunktes werden die füllungsbeeinflussenden Komponenten Verdichtungsdrosselklappe 16, Wastegate-Ventil 30 und Drosselklappe 22 entsprechend angesteuert. Die Komponenten werden modellbasiert vorgesteuert, z.T. mit überlagertem Regler.

In demjenigen Last- bzw. Drehzahlbereich, in dem der Abgasturbolader 18 allein den gewünschten Ladedruck nicht aufzubringen vermag, wird der Kompressor 12 zugeschaltet. Dessen Verdichtung wird mittels der Verdichtungsdrosselklappe 16 gesteuert. In diesem Bereich stellt das Wastegate 30 auf maximale Verdichtung des Abgasturboladers 18. Dabei wirkt die Drosselklappe 22 als Stellglied des Saugrohrdruckes $p_s$. Die Stellungen der beiden Klappen 16 und 22 werden in dem oben beschriebenen Massenstrom-Modell mittels Rückwärtsrechnung berechnet und aufeinander abgestimmt angesteuert. Sobald der Massenstrom, den der Abgasturbolader 18 aufgrund des Abgas-Massenstromes $\dot{m}_{Abg}$ zu fördern vermag, das Fördervolumen des Kompressors übersteigt bzw. sobald der gewünschte Ladedruck vom Abgasturbolader 18 alleine einstellbar ist, wird der Kompressor 12 abgeworfen. Die Verdichtungsdrosselklappe 16 wird vollständig geöffnet, um den Abgasturbolader 18 nicht zu drosseln. Die Einregelung der Verdichtung des Abgasturboladers erfolgt von diesem Punkt an über die Stellung des Wastegate-Ventils 30. Im Volllastfall wird die Drosselklappe 22 vollkommen geöffnet (Boostbetrieb), der Kompressor 12 eingekuppelt und die Verdichtungsdrosselklappe 16 voll geschlossen. Sobald der Abgasturbolader 18 das Volumen hinter dem Kompressor 12 leerzusaugen beginnt, übernimmt die Wastegate-Regelung die Einstellung der Sollfüllung, bis die Sollfüllung erreicht ist. Bis zu diesem Punkt ist die Drosselklappe 22 vollständig geöffnet.

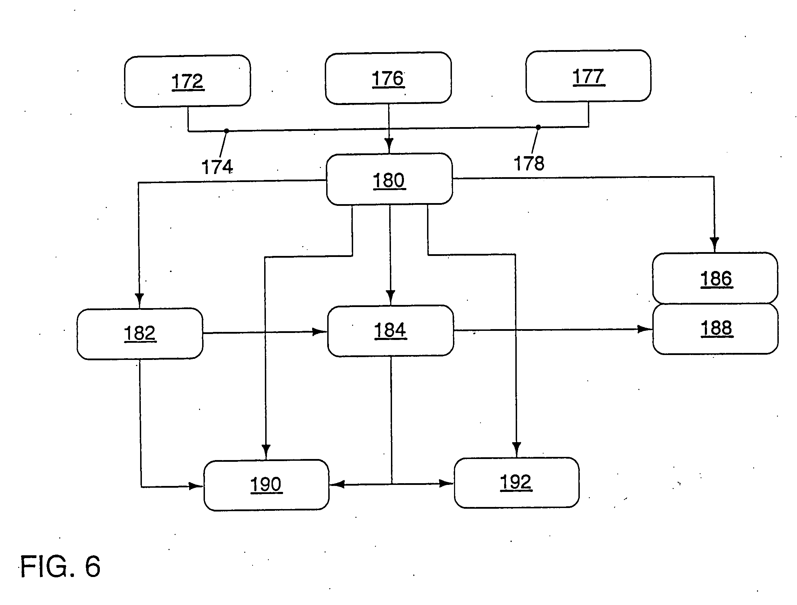

Fig. 6 veranschaulicht schematisch das zuvor beschriebene Ansteuerungskonzept der füllungsbeeinflussenden Komponenten. In Fig. 6 bezeichnet 172 eine Momentenkoordination mit einer Sollfüllung 174 als Ausgang; 176 Motorgrößen (Motordrehzahl $n_{mot}$ ...); 177 einen Füllungsregler mit "deltasollfüllung" 178 als Ausgang; 180 eine Koordination für Regelkomponenten; 182 eine Freigabe für einen nachfolgend noch beschriebenen Dynamikvorhalt; 184 Solldrücke für Druck $p_{vATL}$ vor dem Abgasturbolader 18, Druck $p_{vDKg}$ vor der Drosselklappe 22 und Druck $p_s$ im Saugrohr 24; 186 Freigabe Kompressor 12; 188 Ansteuerung der Verdichtungsdrosselklappe 16; 190 Ansteuerung für die Drosselklappe 22 und 192 Freigabe für Wastegate-Regelung.

Das Volumen des Luftpfades zwischen Abgasturbolader 18 und Drosselklappe 22 (3. Teilsystem 78) verzögert aufgrund seiner Größe den Druckaufbau im Saugrohr 24 und verhindert ein spontanes Ansprechen des Motors bei plötzlichen Laständerungen. In einer bevorzugten Weiterbildung des erfindungsgemäßen Verfahrens dient das in Echtzeit gerechnete Modell für den Luftpfad auch zum Bestimmen eines jeweiligen Sollwinkels für die Stellung $\alpha_{DK}$ der Drosselklappe 22 und die Stellung $\alpha_{VDK}$ der Verdichtungsdrosselklappe 16, um einen Dynamikvorhalt vor der Drosselklappe 22 im mechanisch aufgeladenen Betrieb der Brennkraftmaschine zu realisieren. Hierbei wird mittels der Verdichter 12 und 18 das Volumen des Luftpfades, insbesondere das Volumen des 3. Teilsystems 78, als Druckspeicher verwendet. Das erfindungsgemäße Modell des Luftpfades wird dazu rückwärts gerechnet, um entsprechende Sollwerte für die Stellung $\alpha_{DK}$ der Drosselklappe 22 und die Stellung $\alpha_{VDK}$ der Verdichtungsdrosselklappe 16 zum Druckaufbau im Luftpfad zu erhalten. Mit anderen Worten wird durch gezielte Eingriffe an den Drosselklappen 16 und 22 die Spontanität der Brennkraftmaschine gesteigert. Dies ist vor allem bei Schaltvorgängen vorteilhaft, da es dort zu extremen Wechseln von wenig Last zu hoher Last kommt. Durch diese Nutzung des Speichervermögens des Luftpfades wird aus einem großen Teil des Ansaugvolumens ein Vorteil im Ansprechverhalten der Brennkraftmaschine erzielt. Der Druckvorhalt im Luftpfad zwischen Drosselklappe 22 und Verdichtungsdrosselklappe 16 wird wahlweise leistungs- oder verbrauchsoptimiert durchgeführt.

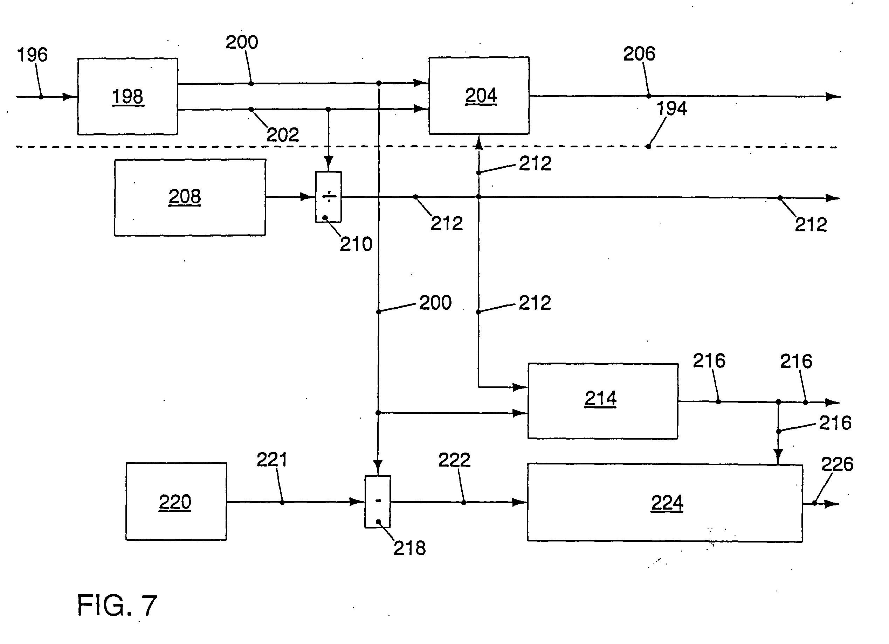

Das erfindungsgemäße Verfahren zum Dynamikvorhalt vor der Drosselklappe 22 ist in Fig. 7 schematisch dargestellt. Oberhalb einer gestrichelten Linie 194 ist die Bestimmung eines Sollwertes für die Stellung $\alpha_{DK}$ der Drosselklappe 22 dargestellt. Hierzu wird aus einer Sollfüllung 196 in einem Block 198 zur Sollwertbildung ein Sollwert 200 für den Frischluft-Massenstrom $\dot{m}_{DK}$ durch die Drosselklappe 22 und ein Sollwert $p_{ssol}$ 202 für den Druck $p_s$ im Saugrohr bestimmt. Die Sollwerte 200 und 202 werden einer Drosselklappenberechnung 204 zugeführt, die einen Sollwinkel 206 für die Stellung $\alpha_{DK}$ der Drosselklappe 22 ausgibt. Aus dem Sollwert $p_{ssol}$ 202 für den Druck $p_s$ im Saugrohr wird zusammen mit einem Faktor für den Dynamikvorhalt (Vorspannfaktor) aus einem Block 208 in einem Berechnungsblock 210 ein Sollwert 212 für den Druck $p_{vDK}$ vor der Drosselklappe 22 bestimmt. Dieser Sollwert 212 wird der Drosselklappenberechnung 204 zugeführt, um den Sollwinkel 206 für die Stellung $\alpha_{DK}$ der Drosselklappe 22 entsprechend zu beeinflussen. Zusätzlich wird der Sollwert 212 für den Druck $p_{vDK}$ vor der Drosselklappe 22 einem Block 214 zugeführt, in dem über ein Kennfeld für den Abgasturbolader 18 zusammen mit dem Sollwert 200 für den Frischluft-Massenstrom $\dot{m}_{DK}$ durch die Drosselklappe 22 ein Sollwert 216 für den Druck $p_{vATL}$ vor dem Abgasturbolader 18 bestimmt wird. Weiterhin wird in einem Berechnungsblock 218 eine Differenz zwischen einem Frischluft-Massenstrom $\dot{m}_K$ 221 durch den Kompressor 12 aus der Füllungserfassung 220 und dem Sollwert 200 für den Frischluft-Massenstrom $\dot{m}_{DK}$ durch die Drosselklappe 22 berechnet. Diese Differenz 222 ist ein Luftüberschuß, der einem Block 224 für die Verdichtungsklappenberechnung zugeführt wird. In diesem Block wird aus dem Luftüberschuß 222 und dem Sollwert 216 für den Druck $p_{vATL}$ vor dem Abgasturbolader 18 ein Sollwert 226 für die Stellung $\alpha_{VDK}$ der Verdichtungsdrosselklappe 16 bestimmt. Alternativ wird aus dem aktuellen Istdruckverhältnis am Abgasturbolader und aus dem Druck $p_{vDK}$ vor der Drosselklappe der Druck $p_{vATL}$ vor dem Abgasturbolader bestimmt. Durch Einstellung der Drosselklappen 16 und 22 auf die so bestimmten Sollwerte ergibt sich ein Druckaufbau zwischen den Drosselklappen 16 und 22. Der Sollwert 212 für den Druck $p_{vDK}$ vor der Drosselklappe 22 wird dem Luftpfadmodell gemäß Fig. 3 zugeführt und mittels Rückwärtsrechnung eine Regelung des Wastegates 30 in entsprechender Weise durchgeführt. Hierdurch wird der Dynamikvorhalt ggf. betriebspunktabhängig auch mittels des Abgasturboladers 18 eingestellt. Die Berechnungen in den Blöcken 204 und 224 erfolgen jeweils ebenfalls mittels Rückwärtsrechnung des Luftpfadmodells gemäß Fig. 3.

Um die aus der Momentenstruktur vorgegebene Sollfüllung auf der Druckebene durch den Abgasturbolader 18 zu realisieren, erfolgt eine Regelung des Druckes vor der Drosselklappe 22 über das Wastegate 30. Die korrekte Einstellung des Ladedruckes ist eine Voraussetzung zur ruckelfreien Füllungssteuerung und optimalen Regelung im stationären und dynamischen Betrieb der Brennkraftmaschine. Ladedruckregler und Vorsteuerung benötigen für die optimale Einstellung des Ladedruckes nichtlineare Kennfelder. Der Parametrisierungs- und Applikationsaufwand ist jedoch sehr groß. In einer bevorzugten Weiterbildung des erfindungsgemäßen Verfahrens ist es vorgesehen, die elektrischen Stellgrößen des Abgasturboladers 18 mittels des Modells für den Luftpfad möglichst genau voraus zu berechnen. Zusätzlich werden die gegenseitigen Wechselwirkungen der füllungsbeeinflussenden Aktuatoren berücksichtigt, bevor sich deren Einfluß in den motorischen Meßgrößen bemerkbar macht.

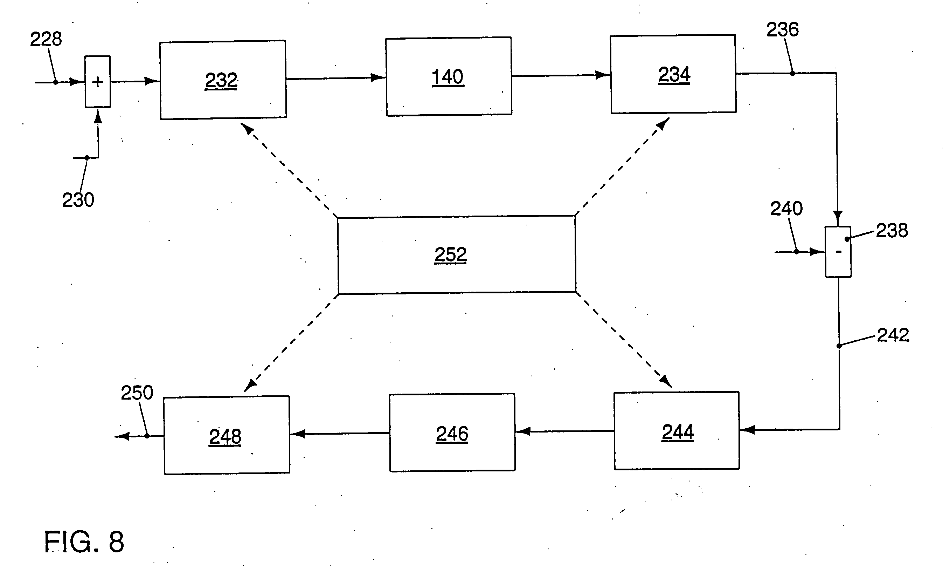

Die erfindungsgemäße Bestimmung eines Solltastverhältnisses für das Wastegate 30 ist schematisch in Fig. 8 dargestellt. Aus einem Sollwert 228 für den Druck $p_{vDK}$ vor der Drosselklappe 22 und dem Druck $p_{vATL}$ 230 vor dem Abgasturbolader 18 wird durch Rückwärtsrechnung des Modells für den Luftpfad gemäß Fig. 3 ein Sollwert 232 für die Verdichterleistung $P_{Verd}$ berechnet. Mittels Rückwärtsrechnung des Turbinenmodells 58 gemäß Fig. 4 wird über die Leistungsbilanz 140 ein Sollwert 234 für die Turbinenleistung $P_{Turb}$ und hieraus durch weiteres Rückwärtsrechnen des Turbinenmodells 54 gemäß Fig. 4 ein Sollwert 236 für den Abgas-Massenstrom $\dot{m}_{Turb}$ durch die Turbine berechnet. In Berechnungsblock 238 wird eine Differenz aus dem Sollwert 236 für den Abgas-Massenstrom $\dot{m}_{Turb}$ durch die Turbine und dem Abgas-Massenstrom $\dot{m}_{Abg}$ 240 berechnet und ein Sollwert 242 für den Abgas-Massenstrom $\dot{m}_{WG}$ durch das Wastegate 30 ausgegeben. Mittels der Blöcke "Wastegate-Ventilkennline" 244, "Hub/Druckkurve Wastegate" 246 und "Umrechnung Druck/Tastverhältnis Wastegate" 248 wird ein Sollwert 250 für das Tastverhältnis des Ansteuersignals für das beispielsweise pneumatisch angesteuerte Wastegate 30 bestimmt. Die Rückwärtsrechnung des Modells für den Luftpfad zur Füllungserfassung (Fig. 2 bis 4) ist durch den Block 252 angedeutet. Mit der Rückrechnung des in der Füllungserfassung integrierten Modells 54 für den Abgasturbolader 18 wird so zu einem gewünschten Verdichtungsverhältnis am Abgasturbolader 18 das erforderlicher Wastegate-Tastverhältnis 250 ermittelt.

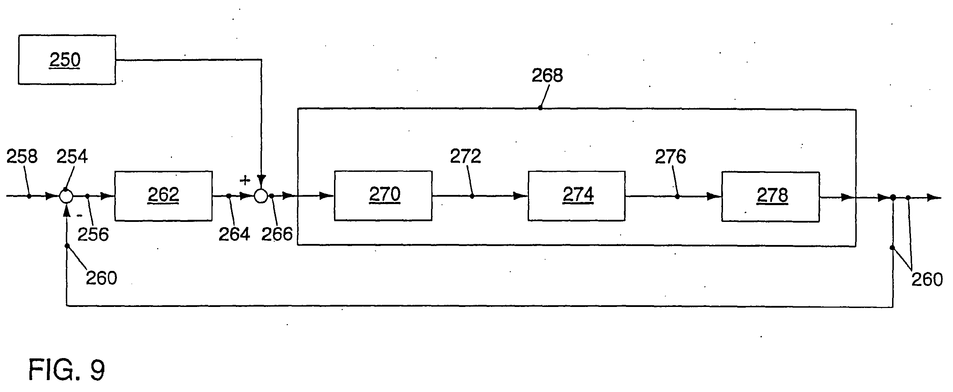

Dieses so ermittelte Wastegate-Tastverhältnis 250 dient in einer bevorzugten Weiterbildung der Erfindung als Vorsteuerwert für eine Regelung des Ladedruckes. Eine Ladedruckregelung erhöht die Dynamik des Systems gegenüber des rein vorgesteuerten Ladedruckaufbaus. Außerdem werden Einflüsse von Störgrößen, wie beispielsweise Bauteilstreuung und -alterung etc., die in der Vorsteuerung zur Fehlansteuerung führen würden, ausgeregelt. Dies erzielt eine Ladedruckregelung mit erhöhter Genauigkeit und Dynamik. Fig. 9 veranschaulicht schematisch eine erfindungsgemäß ausgestaltete Ladedruckregelung mit modellbasiertem Vorsteuerwert 250 für die doppelt aufgeladene Brennkraftmaschine gemäß Fig. 1. In einem Berechnungsblock 254 wird eine Differenz 256 zwischen einem Sollwert 258 für den Druck $p_{vDK}$ vor der Drosselklappe 22 und einem Istwert 260 für den Druck $p_{vDK}$ vor der Drosselklappe 22. Diese Differenz 256 wird einem Regler 262 einer Turboladerstrecke zugeführt. Dem Ausgang 264 des Regler 262 wird der Vorsteuerwert 250 hinzu addiert und ein Tastverhältnis $t_{vWG}$ 266 für das Wastegate bestimmt. Dieses Tastverhältnis $t_{vWG}$ 266 wird auf die Regelstrecke 268 angewendet und es ergibt sich am Ende der Istwert 260 für den Druck $p_{vDK}$ vor der Drosselklappe. Die Regelstrecke 268 umfaßt eine Strecke 270 "Drehzahl der Turbine mit Wastegate-Einfluß" aus der sich eine Turbinendrehzahl $n_{Turbine}$ 272 ergibt. Diese Turbinendrehzahl $n_{Turbine}$ 272 wirkt auf die Strecke 274 "Verdichtung über Turbolader", aus der sich ein Druck $p_{hATL}$ 276 hinter dem Abgasturbolader 18 ergibt. Der Druck $p_{hATL}$ 276 hinter dem Abgasturbolader 18 wirkt auf die Strecke 278 des Volumens hinter dem Abgasturbolader 18 bis zur Drosselklappe 22, aus der sich der Istwert 260 für den Druck $p_{vDK}$ vor der Drosselklappe 22 ergibt. Die Regelung der Verdichtung des Abgasturboladers 18 erfolgt über die Ansteuerung des Wastegate-Ventils 30. Der Regler setzt dabei auf modellbasierte Wastegate-Vorsteuerwerte 250 auf. Durch den Aufbau des Zusammenspiels von Regler und Vorsteuerwert arbeitet der Regler nur in einem kleinen Bereich um den Vorsteuerwert herum. Der I-Anteil kann stark begrenzt ausgelegt werden. Der Regler fungiert zum einen als Korrektur der Vorsteuerung und zum anderen um das dynamische Verhalten der Ansteuerung des Abgasturboladers 18 zu verbessern. Aus diesem Grund wird der Regler mit verschiedenen Parameterkennfeldern zur nahezu stationären Ausregelung und zur dynamischen Regelung versehen.

**Patentansprüche**

1. Verfahren zum Betreiben einer Brennkraftmaschine, insbesondere Dieselmotor, insbesondere eines Kraftfahrzeugs, mit einem Luftpfad für Ansaugluft, **dadurch gekennzeichnet, daß** durch wenigstens ein im Luftpfad angeordnetes erstes Bauteil ein Frischluft-Massenstrom $\dot{m}_E$ durch dieses erste Bauteil und durch wenigstens ein im Luftpfad dem ersten Bauteil nachgeordnetes zweites Bauteil ein Frischluft-Massenstrom $\dot{m}_A$ durch dieses zweite Bauteil bestimmt wird; und daß aus der Summe $\dot{m}_E$ - $\dot{m}_A$ von zuströmenden $\dot{m}_E$ und abströmenden $\dot{m}_A$ Frischluft-Massenströmen zwischen erstem und zweitem Bauteil ein dort herrschender Druck $p_L$ berechnet wird.

2. Verfahren nach Anspruch 1, **dadurch gekennzeichnet, daß** das erste und zweite Bauteil einen Luftfilter, einen Kompressor, einen Abgasturbolader eine Verdichtungsdrosselklappe, eine Drosselklappe und/oder einen Lufteinlaß für Zylinder der Brennkraftmaschine umfassen.

3. Verfahren nach Anspruch 1 oder 2, **dadurch gekennzeichnet, daß** der Druck $p_L$ durch Integration der Gleichung,

$$\frac{dp_L}{dt} = \frac{\dot{m}_E - \dot{m}_A}{V_{ASR}/_{R \cdot T_L}}$$

berechnet wird, wobei $V_{ASR}$ das Volumen zwischen dem ersten und dem zweiten Bauteil, $R$ die Gaskonstante und $T_L$ die Temperatur der Luft zwischen dem ersten und zweiten Bauteil ist.

4. Verfahren nach wenigstens einem der vorhergehenden Ansprüche, **dadurch gekennzeichnet, daß** die jeweiligen Frischluft-Massenströme durch ein das jeweilige Bauteil beschreibendes Modell mit einem Druck vor dem jeweiligen Bauteil und entsprechenden, bauteilcharakteristischen Parametern als Eingangsparameter für das Modell berechnet werden.

5. Verfahren nach wenigstens einem der vorhergehenden Ansprüche, **dadurch gekennzeichnet, daß** in dem Luftpfad für Ansaugluft ein Kompressor, ein Abgasturbolader, eine Verdichtungsdrosselklappe und eine Drosselklappe angeordnet sind, wobei ein Ausgang des Kompressors mit einem Eingang des Abgasturboladers verbunden ist, ein den Kompressor überbrückender sowie durch die Verdichtungsdrosselklappe wahlweise schließbarer Luftkanal vorgesehen ist und stromab des Abgasturboladers die Drosselklappe angeordnet ist, wobei

    ein Frischluft-Massenstrom $\dot{m}_{VDK}$ durch die Verdichtungsdrosselklappe berechnet wird;
    ein Frischluft-Massenstrom $\dot{m}_k$ durch den Kompressor berechnet wird;
    ein Frischluft-Massenstrom $\dot{m}_{ATL}$ durch den Abgasturbolader berechnet wird;
    ein Frischluft-Massenstrom $\dot{m}_{DK}$ durch die Drosselklappe berechnet wird;
    ein Frischluft-Massenstrom $\dot{m}_{Br}$ in einen Brennraum der Brennkraftmaschine bestimmt wird;
    aus der Summe $\dot{m}_K$ - $\dot{m}_{VDK}$ - $\dot{m}_{ATL}$ von zuströmenden und abströmenden Frischluft-Massenströmen vor dem Abgasturbolader ein Druck $p_{vATL}$ vor dem Abgasturbolader berechnet wird;
    aus der Summe $\dot{m}_{ATL}$ - $\dot{m}_{DK}$ von zuströmenden und abströmenden Frischluft-Massenströmen vor der Drosselklappe ein Druck $p_{vDK}$ vor der Drosselklappe berechnet wird;

aus der Summe $\dot{m}_{DK} - \dot{m}_{Br}$ von zuströmenden und abströmenden Frischluft-Massenströmen vor der Brennkraftmaschine ein Druck $p_s$ im Saugrohr berechnet wird und

der Saugrohrdruck $p_s$ als Eingangswert einem Saugrohrmodell zur Füllungserfassung zugeführt wird.

6. Verfahren nach Anspruch 5, **dadurch gekennzeichnet, daß** der Druck $p_{vATL}$ durch Integration der Gleichung

$$\frac{dp_{vATL}}{dt} = \frac{\dot{m}_K - \dot{m}_{VDK} - \dot{m}_{ATL}}{V_{K\_ATL}/_{R \cdot T_{L-K-ATL}}}$$

berechnet wird, wobei $V_{K\_ATL}$ das Volumen des Luftpfades zwischen dem Kompressor und dem Abgasturbolader, $R$ die Gaskonstante und $T_{L-K-ATL}$ die Temperatur der Luft zwischen dem Kompressor und dem Abgasturbolader ist.

7. Verfahren nach Anspruch 5 oder 6, **dadurch gekennzeichnet, daß** der Druck $p_{vDK}$ durch Integration der Gleichung

$$\frac{dp_{vDK}}{dt} = \frac{\dot{m}_{ATL} - \dot{m}_{DK}}{V_{ATL\_DK}/_{R \cdot T_{L-ATL-DK}}}$$

berechnet wird, wobei $V_{ATL\_DK}$ das Volumen des Luftpfades zwischen dem Abgasturbolader und der Drosselklappe, $R$ die Gaskonstante und $T_{L\_ATL\_DK}$ die Temperatur der Luft zwischen dem Abgasturbolader und der Drosselklappe ist.

8. Verfahren nach einem der Ansprüche 5 bis 7, **dadurch gekennzeichnet, daß** der Druck $p_s$ durch Integration der Gleichung

$$\frac{dp_S}{dt} = \frac{\dot{m}_{DK} - \dot{m}_{Br}}{V_S/_{R \cdot T_{L-SR}}}$$

berechnet wird, wobei $V_s$ das Volumen des Saugrohres, $R$ die Gaskonstante und $T_{L-SR}$ die Temperatur der Luft im Saugrohr ist.

9. Verfahren nach einem der Ansprüche 5 bis 8, **dadurch gekennzeichnet, daß** der Frischluft-Massenstrom $\dot{m}_{VDK}$ aus einem Modell für die Verdichtungsdrosselklappe mit den Eingangsparametern Umgebungstemperatur $t_u$, Umgebungsdruck $p_u$ und Stellung $\alpha_{VDK}$ der Verdichtungsdrosselklappe berechnet wird.

10. Verfahren nach Anspruch 9, **dadurch gekennzeichnet, daß** durch Rückwärtsrechnung des Modells für die Verdichtungsdrosselklappe für einen vorgegebenen Druck $p_{vATL}$ vor dem Abgasturbolader eine Stellung $\alpha_{VDK}$ der Verdichtungsdrosselklappe berechnet wird.

11. Verfahren nach einem der Ansprüche 5 bis 10, **dadurch gekennzeichnet, daß** der Frischluft-Massenstrom $\dot{m}_K$ aus einem Modell für den Kompressor mit den Eingangsparametern Kompressordrehzahl $n_K$ und Umgebungsdruck $p_u$ berechnet wird.

12. Verfahren nach einem der Ansprüche 5 bis 11, **dadurch gekennzeichnet, daß** der Frischluft-Massenstrom $\dot{m}_{ATL}$ aus einem Modell für den Abgasturbolader mit den Eingangsparametern Druck $p_{vATL}$ vor dem Abgasturbolader und Drehzahl $n_{ATL}$ des Abgasturboladers und/oder Leistung $P_{ATL}$ des Abgasturboladers berechnet wird.

13. Verfahren nach Anspruch 12, **dadurch gekennzeichnet, daß** die Drehzahl $n_{ATL}$ des Abgasturboladers aus einem Turbinenmodell für den Abgasturbolader iterativ mit einem Abgas-Massenstrom $\dot{m}_{Abg}$, einer Abgastemperatur $T_{Abg}$, einem Frischluft-Massenstrom $\dot{m}_{ATL}$ durch den Abgasturbolader aus einer vorhergehenden Berechnung, einer Temperatur $T_{ATL}$ am Abgasturbolader, einem Abgas-Massenstrom $\dot{m}_{WG}$ durch ein Wastegate und einem Öffnungswert $\alpha_{WG}$ für das Wastegate als Eingangswerte berechnet wird.

14. Verfahren nach Anspruch 13, **dadurch gekennzeichnet, daß** der Abgas-Massenstrom $\dot{m}_{Abg}$ aus einer Füllungserfassung und die Abgastemperatur $T_{Abg}$ aus einem Abgastemperaturmodell bestimmt werden.

15. Verfahren nach Anspruch 13 oder 14, **dadurch gekennzeichnet, daß** durch Rückwärtsrechnung des Modells für den Abgasturbolader und des Turbinenmodells für einen vorgegebenen Druck $p_{vDK}$ vor der Drosselklappe ein Solltastverhältnis für das Wastegate berechnet wird.

16. Verfahren nach Anspruch 15, **dadurch gekennzeichnet, daß** das Solltastverhältnis für das Wastegate einem Regler für den Ladedruck als Vorsteuerwert zugeführt wird, wobei der Vorsteuerwert einem Regelwert aus einem Regler für eine Turboladerstrecke zum Berechnen eines Tastverhältnisses $t_{vWG}$ für das Wastegate hinzu addiert wird.

**17.** Verfahren nach einem der Ansprüche 12 bis 16, **dadurch gekennzeichnet, daß** aus einer Differenz zwischen dem berechneten Druck $p_{vDK}$ vor der Drosselklappe und einem mittels eines Sensors gemessenen Druck $p_{vDKg}$ vor der Drosselklappe ein Korrekturwert für die Drehzahl $n_{ATL}$ des Abgasturboladers bestimmt wird.

**18.** Verfahren nach wenigstens einem der Ansprüche 5 bis 17, **dadurch gekennzeichnet, daß** der Frischluft-Massenstrom $\dot{m}_{DK}$ aus einem Modell für die Drosselklappe mit den Eingangsparametern Temperatur $T_{vDK}$ vor der Drosselklappe, Saugrohrdruck $p_s$, Druck $p_{vDK}$ vor der Drosselklappe und Drosselklappenstellung $\alpha_{DK}$ berechnet wird.

**19.** Verfahren nach Anspruch 18, **dadurch gekennzeichnet, daß** durch Rückwärtsrechnung des Modells für die Drosselklappe für einen vorgegebenen Druck $p_s$ im Saugrohr eine Stellung $\alpha_{DK}$ der Drosselklappe berechnet wird.

**20.** Verfahren nach Anspruch 10 und 19, **dadurch gekennzeichnet, daß** eine Differenz zwischen einem Sollwert für den Frischluft-Massenstrom $\dot{m}_{DK}$ durch die Drosselklappe und einem Frischluft-Massenstrom $\dot{m}_K$ durch den Kompressor bestimmt wird und diese Differenz zusammen mit einem Sollwert für den Druck $p_{vATL}$ vor dem Abgasturbolader als Eingangswert für die Rückwärtsrechnung zur Berechnung eines Sollwertes für die Stellung $\alpha_{VDK}$ der Verdichtungsdrosselklappe verwendet wird, und daß aus einem Sollwert $p_{ssol}$ für den Druck $p_s$ im Saugrohr zusammen mit einem Faktor für einen Dynamikvorhalt ein Sollwert für den Druck $p_{vDK}$ vor der Drosselklappe berechnet wird, wobei dieser Sollwert für den Druck $p_{vDK}$ vor der Drosselklappe zusammen mit dem Sollwert $p_{ssol}$ für den Druck $p_s$ im Saugrohr und einem Sollwert für den Frischluft-Massenstrom $\dot{m}_{DK}$ durch die Drosselklappe als Eingangswert für die Rückwärtsrechnung zur Berechnung eines Sollwertes für die Stellung $\alpha_{DK}$ der Drosselklappe verwendet wird.

**21.** Verfahren nach Anspruch 20, **dadurch gekennzeichnet, daß** aus dem Sollwert für den Druck $p_{vDK}$ vor der Drosselklappe und dem Sollwert für den Frischluft-Massenstrom $\dot{m}_{DK}$ durch die Drosselklappe mittels eines Kennfeldes für den Abgasturbolader der Sollwert für den Druck $p_{vATL}$ vor dem Abgasturbolader bestimmt wird.

**22.** Verfahren nach Anspruch 10 und 19, **dadurch gekennzeichnet, daß** aus dem aktuellen Istdruckverhältnis am Abgasturbolader und aus dem Druck $p_{vDK}$ vor der Drosselklappe der Druck $p_{vATL}$ vor dem Abgasturbolader bestimmt wird.

**23.** Verfahren nach wenigstens einem der vorhergehenden Ansprüche, **dadurch gekennzeichnet, daß** der Druck $p_L$ als Eingangswert einem Saugrohrmodell zur Füllungserfassung zugeführt wird

FIG. 1

FIG. 2

EP 1 398 490 A2

FIG. 3

58

126
124
122
120
128

132
130
134

136
138

142 144
140
146

150
148
152

FIG. 4

15

FIG. 5

44.50 · 54 · 58 · 62 · 66 · 58 · 67 · 166 · 58

46 · 51 · 52 · 60 · 56 · 154 · 156 · 158 · 160 · 162 · 168 · 170

FIG. 6

EP 1 398 490 A2

FIG. 7

EP 1 398 490 A2

FIG. 8

FIG. 9

EP 1 398 490 A2